# EUROPÄISCHE PATENTSCHRIFT

(11) **EP 3 367 775 B1**
(45) Veröffentlichungstag und Bekanntmachung des Hinweises auf die Patenterteilung: **11.10.2023**
(21) Anmeldenummer: 16798390.7
(22) Anmeldetag: 27.10.2016
(51) Int. Cl.: A01B 73/04

(54) **LANDWIRTSCHAFTLICHER MASCHINENRAHMEN**
AGRICULTURAL MACHINE FRAME
BÂTI D'ENGIN AGRICOLE

(30) Priorität: 27.10.2015 DE 102015118354
(43) Veröffentlichungstag der Anmeldung: 05.09.2018
(73) Patentinhaber: Lemken GmbH & Co. KG, 46519 Alpen (DE)
(72) Erfinder: GEBBEKEN, Martin, 46519 Alpen (DE); BERGERFURTH, Dennis, 46459 Rees (DE); BERENDSEN, Mark, 7044 AJ Lengel (NL); GERAATS, Marcel, 41334 Nettetal (DE); GOTZEN, Christian, 41751 Viersen (DE); LUKAS, Thomas, 48683 Ahaus-Wüllen (DE); PAESSENS, Christian, 47661 Issum (DE); WERRIES, Dieter, 46519 Alpen (DE); VAN KANN, Andreas, 53949 Dahlem (DE); DIEPERS, Clemens, 47647 Aldekerk (DE)
(86) Internationale Anmeldenummer: PCT/DE2016/100505
(87) Internationale Veröffentlichungsnummer: WO 2017/071691

(56) Entgegenhaltungen:
- EP-A1- 2 020 172
- EP-B1- 0 878 118
- WO-A2-2012/170548
- US-A- 4 316 511

## Beschreibung

Die Erfindung betrifft einen landwirtschaftlichen Maschinenrahmen gemäß dem Oberbegriff des Patentanspruches 1 zur Verwendung in einer landwirtschaftlichen Maschine. Solche Maschinenrahmen werden gerne in Bodenbearbeitungsgeräten oder Sägeräten, ebenso aber auch als Verteilgestänge beispielsweise an einer Feldspritze verwendet. Dabei besteht der Maschinenrahmen aus einem Mittelteil, welcher zur Anhängung oder zum Anbau an ein Fahrzeug oder eines Fahrwerkes dient, sowie zumindest zwei Seitenteilen, welche sich seitlich von dem Mittelrahmen erstrecken und von einer gestreckten Arbeitsstellung in eine kompakte Transportstellung geklappt werden können. Die europäische Patentschrift EP 0 878 118 B1 beschreibt den klappbaren Maschinenrahmen eine Kreiselegge zur Bodenbearbeitung. An einem mittleren Maschinenrahmen sind zwei Ausleger als Seitenteile schwenkbar angebracht, an welche jeweils eine Kreiseleggenhälfte aufgehängt ist. Um eine Schwenkachse können die beiden Ausleger jeweils mittels eines Hydraulikzylinders, welcher zwischen Mittelrahmen und Seitenteil beweglich abgeordnet ist, von einer breiten, horizontalen Stellung, nämlich der Arbeitsstellung, in eine schmalere, vertikale Stellung, nämlich der Transportstellung, hydraulisch hochgeklappt werden. Dabei sind die beiden Hydraulikzylinder baulich in dem Mittelrahmen integriert, damit oberhalb des Mittelrahmens andere Baugruppen wie Getriebe oder Vorratsbehälter platzsparend und kompakt angeordnet werden können. Die PCT-Anmeldung WO 2012/170 548 zeigt beispielsweise in Figur 6 ebenfalls einen Maschinenrahmen eines Bodenbearbeitungsgerätes mit einem Mittelrahmen und daran scharnierten Seitenteilen. Mittels Hydraulikzylinder, welche nur die Seitenteile kostensparend mechanisch miteinander verbinden, können beide Seitenteile ebenfalls von einer horizontalen Arbeitsstellung in eine vertikale Transportstellung überführt werden. Im Gegensatz zur vorherigen Patentschrift, an welcher die Schwenkbewegung durch hydraulische Leitungswiderstände natürlich gedämpft werden, ist in der vorliegenden PCT-Anmeldung während des Klapp Vorganges ein freies und unbestimmtes Schwenken des Seitenteile möglich, indem bei etwas angewinkelter Stellung ein Seitenteil herunterfällt und das andere über den gekoppelten Hydraulikzylinder nach oben gerissen wird. Hierdurch können Maschinenschäden und Unfälle verursacht werden.

Aufgabe der Erfindung ist es, einen klappbaren, kompakten und kostengünstigen Maschinenrahmen bereitzustellen, welche die zuvor genannten Nachteile behebt. Diese Aufgabe wird durch die Merkmale des kennzeichnenden Teiles des Anspruches 1 gelöst.

Durch Festsetzen der Zylinderbaugruppe in seiner lateralen Bewegung zum Mittelrahmen erfolgen die Schwenkbewegung der Seitenteile hydraulisch gedämpft über die Zylinderbaugruppe, welche mit ihren jeweiligen Kolbenstangen die rechten und linken Seitenteile miteinander verbindet und durch die Kolbenbewegung die Schwenkung der Seitenteile verursacht. Dabei erfolgt das Abfangen oder Abstützen der resultierenden, seitlichen Dämpfungskräfte in das Mittelteil durch ein Begrenzungsmittel, welches zwischen dem Mittelteil und der Zylinderbaugruppe angeordnet ist. Nur ein einziger von sechs Freiheitsgraden der Zylinderbaugruppe bzw. ihres Zylinderrohres bedarf der Arretierung. Vorteilhafterweise lenkt man die Zylinderbaugruppe mit zumindest einem beweglichen Querlenker, auch als Panhardstab bekannt, an, welcher zwischen dem Mittelrahmen und der Zylinderbaugruppe gelenkig angeordnet ist. Dabei verläuft die Wirklinie in etwa parallel zur Zylinderlängsachse, um seitliche Zylinderbewegungen relativ zur Mittelebene auf ein Minimum zu reduzieren.

In einer weiteren Erfindungsform ist das Begrenzungsmittel als Kombination von einem Vorsprung und einer Kulisse dargestellt, beispielsweise ein Zapfen oder Bolzen, welcher in einem Langloch vorzugsweise vertikal beweglich hin und her läuft.

Werden die Seitenflanken der Anschlagkulisse, welche den Zapfen oder Bolzen führen, nichtparallel zur aufrechten Mittelebene des Mittelrahmens ausgebildet, beispielsweise in X-, Rauten-, Oval- oder Dreiecksform, so kann die Zylinderbaugruppe je nach Hebelkonfiguration der Seitenteile endlagenabhängig mit mehr oder weniger seitlichem Führungsspiel ausgelegt werden, beispielsweise mit Nullspiel in Transportstellung und einem vergrößertem Spiel in Arbeitsstellung, um eine Relativbewegung der Seitenteile zum Mittelteil zum Ausgleich von Geländeunebenheiten zu ermöglichen. Dabei können der Anschlagsvorsprung und/oder die Anschlagskulisse mit elastischen Anschlagsflächen versehen werden, um Stöße etc, federnd oder dämpfend abzufangen.

Dabei ist zumindest ein Anschlagvorsprung der Hydraulikzylinderbaugruppe und die Kulisse als Ausnehmung dem Mittelrahmen zugeordnet. Ebenso kann die Zylinderbaugruppe mit zumindest einer vertikalen Nut ausgefüllt seien, in welche einen oder mehrere rahmenseits befestigte Stifte oder Vorsprünge eingreifen und die Zylinder Baugruppe in ihrer Bewegung seitlich zur Mittelebene vorzugsweise spielfrei hindern.

Durch Anordnung der Hydraulikzylinder Baugruppe unterhalb der Scharnierachsen des Mittelrahmens entsteht oberhalb des Mittelrahmens ein freier Bauraum, beispielsweise zur Anordnung eines Getriebes oder für Behälter zur Aufnahme von Betriebsstoffen des landwirtschaftlichen Gerätes oder von auszubringenden Gütern. Zugleich erfolgt die hydraulische Druckbeaufschlagung zum Ingangsetzen der Einklappbewegung auf der Kolbenbodenseite, wodurch im Gegensatz zu Zugzylindern, welche auf der Kolbenringseite beaufschlagt werden, ein geringerer, platzsparender und kostengünstiger Kolben- und Zylinderdurchmesser erforderlich ist.

Ordnet man zwischen der rechten und der linken Kolbeneinheit in das Zylinderrohr eine Zwischenwand an, so wird die Bewegung der Kolbeneinheiten in das Zylinderinnere symmetrisch auf einen minimales Einbaumaß begrenzt. Vorzugsweise steht dabei die Zwischen- oder Mittelwand zumindest partiell erhaben aus der Kontur des Zylinderrohres hervor um bildet einen Vorsprung, welcher zusammen mit einer Kulisse des Mittelrahmens die Zylinderbaugruppe seitlich führt. Ebenso ist der umgekehrte Fall denkbar, indem die Zwischen- oder Mittelwand mit einer Nut und der Mittelrahmen zumindest mit einem Führungsstift ausgestattet wird.

Versieht man die Mittelwand mit weiteren Durchbrüchen, vorzugsweise Bohrungen, können auf einfachste Weise die Zylinderräume miteinander oder mit außenliegenden Leitungen, um die Hydraulikzylinderbaugruppe an eine Druckversorgung anzuschließen, verbunden werden.

Durch Einbau weiterer, vorzugsweise einstellbarer Schwenkanschläge werden definierte Endlagen der Schwenkbewegungen der Seitenteile erreicht, wobei die Hydraulikzylindergruppe minimale bzw. maximale Einbaumaße überschreiten darf, was eine Wiederverwendung im Baukastensystem fördert. Zugleich werden die Toleranzanforderungen an die Begrenzungsmittel zur seitlichen Fixierung der Zylinderbaugruppe wesentlich verringert.

Die Erfindung zeichnet sich insbesondere dadurch aus, dass durch Einbau eines Doppelkolbenzylinders zwischen den Schwenkhebeln einer rechten und einer linken Rahmenhälfte, welche jeweils um das Mittelteil eines landwirtschaftlichen Maschinenrahmens schwenken, sich die Kolbenkräfte innerhalb der Zylinderbaugruppe größtenteils gegenseitig abstützen. Ein freies, undefiniertes Hin- und Herschlagen der rechten oder linken Rahmenhälften während des Klappvorganges wird durch Begrenzung der seitlichen Bewegung der Zylinderbaugruppe und seines Zylinderrohres relativ zum Mittelteil des Maschinenrahmens bei geringem Lagerungsaufwand sicher verhindert. Im Gegensatz zu einem starr befestigten Zylinderrohr im Mittelteil, welches über weitere Koppellaschen die Seitenteile bewegen würde, bleibt die vorliegende Hydraulikzylinderbaugruppe nahezu frei von jeglichen radialen Kräften, welche die Dichtungen und Kolbenführungen belasten.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig.1 einen ausgeklappten landwirtschaftlichen Maschinenrahmen in Arbeitsstellung schräg von vorn unten
Fig.2 den Maschinenrahmen in Transportstellung aus gleicher Perspektive
Fig. 3 eine Heckansicht auf das Mittelteil des Maschinenrahmens mit angrenzenden Seitenteil
Fig. 4 einen prinzipiellen Aufbau der Hydraulikzylinderbaugruppe Figurenbeschreibung

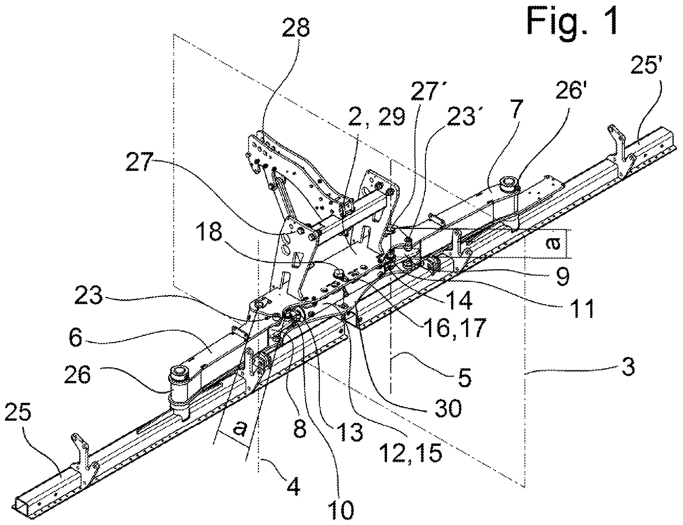

Figur 1 zeigt einen landwirtschaftlichen Maschinenrahmen 1, wie er beispielsweise an Bodenbearbeitungsgeräten, Verteil- oder Sämaschinen eingesetzt werden kann. Eine nahezu symmetrisch zu einer Mittelebene 3 aufgebauter Mittelrahmen, weiterhin als Mittelteil 2 bezeichnet, ist mit vorderen Anbaupunkten 27, 27' zur Aufnahme in die Hubeinrichtung eines Fahrzeuges sowie einem weiteren, oberen Anlenkpunkt 28 zur Aufnahme eines Oberlenkers des zugehörigen Fahrzeuges ausgestattet. Weiterhin besteht das Mittelteil 2 aus einer vorderen und einer hinteren Rahmenplatte 29, 30, welche rechts und links mit Durchbrüchen zur Aufnahme jeweils einer Scharnierachse 4, 5 versehen ist, in welche jeweils ein Bolzen eingesteckt ist. Über jeweils eine Scharnierachse 4, 5 ist rechts und links der Mittelebene 3 jeweils ein Seitenteil 6, 7 schwenkbar angelenkt. Ein Endanschlag 23, 23' begrenzt die untere Lage des Seitenteile 6, 7 relativ zum Mittelteil 2. An jedes Seitenteil 6, 7 ist eine Lasche unterhalb der Scharnierachsen 4, 5 als Hebel 8, 9 angeschweißt. Die äußeren Hebelenden 10, 11 sind im Abstand a zur jeweiligen Scharnierachse 4, 5 mit einer Bohrung zur Aufnahme eines Lagerbolzen versehen. Zwischen der vorderen und hinteren Rahmenplatte 29, 30 des Mittelteils 2 befindet sich die Hydraulikzylinderbaugruppe 12, bestehend aus einem Zylinderrohr 15 und einer rechts und links herausstehenden Kolbeneinheit 13, 14. An dem äußeren Ende der Kolbeneinheit 13, 14 ist jeweils ein Gabelkopf angeschraubt, welcher über den zuvor genannten Lagerbolzen die Kolbeneinheit 13, 14 jeweils mit dem Hebel 10, 11 gelenkig verbindet. An den jeweils äußeren Enden der Seitenteile 6, 7 sind Gelenke 26, 26' mit darin schwenkbar gelagerten Befestigungsleisten 25, 25' angeordnet. An den Befestigungsleisten 25, 25`, die nicht zwingend schwenkbar gelagert sein müssen und welche sich etwa über die halbe Maschinenbreite des landwirtschaftlichen Gerätes erstrecken, können in verschiedenen Abständen Bodenbearbeitungs-, Ausbring- oder Säwerkzeuge befestigt werden. Ebenso ist an die Anordnung einer Kreiseleggenhälfte, eines Mähers oder zusätzlicher, weiterer klappbarer Seitenteile gedacht. Mittig am Zylinderrohr 15 sind zwei Gewindebuchsen als Anschlagvorsprung 16 eingeschweißt, deren Mittelachse sich parallel zur Mittelebene 3 erstreckt Die vordere und hintere Rahmenplatte 29, 30 sind jeweils in Richtung der Mittelebene 3 mit einem Langloch als Durchbruch versehen, welches die Anschlagkulissse 17 bildet. Mit einer nicht sichtbaren Distanzbuchse ist von außen ein Gewindebolzen 18 durch das Langloch in die Gewindebuchse eingeschraubt und bildet den gesamten Anschlagvorsprung 16, welcher mit dem Langloch als Anschlagkulissse 17 das Zylinderrohr 15 vertikal entlang der Mittelebene 3 führt und dessen seitliche Bewegung relativ zum Mittelebene 3 verhindert.

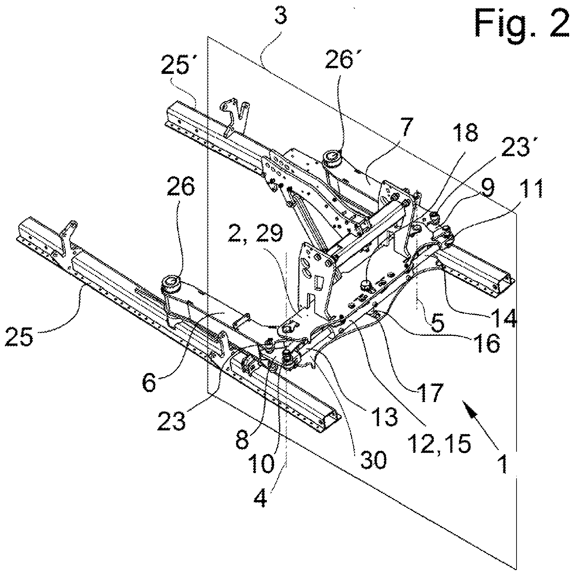

Figur 2 zeigt den gleichen Maschinenrahmen 1, wie zuvor in Figur 1 erklärt, jedoch mit hydraulisch ausgefahrenen Kolbeneinheiten 13, 14, welche die jeweiligen Seitenteile 6, 7 um die jeweilige Scharnierachse 4, 5 mittels der Hebel 8, 9 in die obere Transportstellung verschwenkt haben. Durch weitere, nicht dargestellte Anschlagmittel werden die jeweils um die Gelenke 26, 26' schwenkbaren Befestigungsleisten 25, 25' ebenfalls in aufrechte Stellung arretiert und gesichert. Weitere Bezugszeichen gelten analog zu Figur 1.

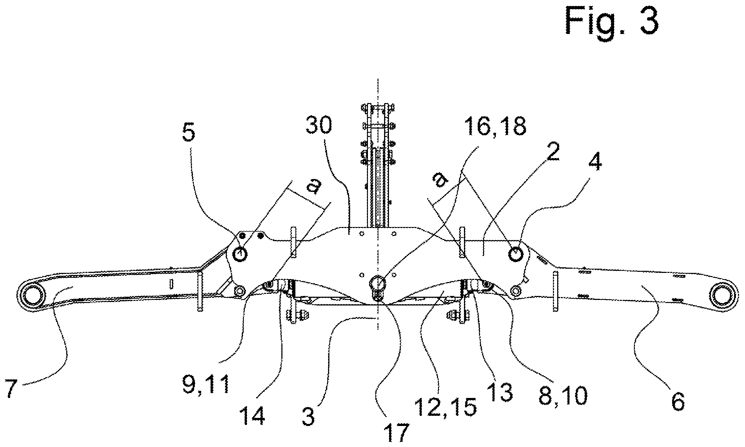

Figur 3 zeigt noch mal den prinzipiellen Aufbau des Maschinenrahmen 1 aus horizontaler Sicht von hinten in ausgeklapptem Zustand. Dargestellt ist die hintere Rahmenplatte 30 des Mittelteils 2 mit seinen rechten und linken Scharnierachsen 4 ,5, in welche das rechte und linke Seitenteil 6, 7 eingehängt sind. Der Abstand a zwischen der jeweiligen Scharnierachse 4, 5 und dem zugehörigem Hebelende 10, 11 definiert den wirksamen Hebelabstand für die Hydraulikzylinderbaugruppe 12 zur Ausübung der Schwenkbewegung des jeweiligen Seitenteiles 6, 7. Im dargestellten, ausgeklappten Zustand ist der lichte Abstand der Hebelenden 10, 11 zueinander kleiner als der Abstand der Scharnierachsen 4, 5 zueinander, im eingeklappten Zustand entsprechen Figur 2 größer. Würde die Hydraulikzylinderbaugruppe 12 oberhalb der Scharnierachsen 4, 5 angeordnet, gelten die umgekehrten Abstandsverhältnisse. Sichtbar von hinten auf die Rahmenplatte 30 ist deren Langlochdurchbruch als Anschlagkulisse 17, in welcher sich die Zylinderbaugruppe 12 bzw. das Zylinder Rohr 15 mittels der Anschlagvorsprünge 16 bzw. der Bolzen 18 frei entlang der Mittelebene 3, jedoch seitlich geführt zu dieser bewegen kann.

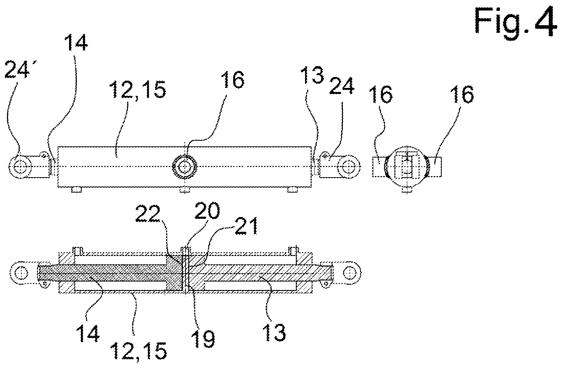

Figur 4 zeigt den prinzipiellen Aufbau der Hydraulikzylinderbaugruppe 12. Das Zylinderrohr 15 wird durch die Mittelwand 19 in zwei Hälften unterteilt. In beiden Rohrhälften bewegt sich jeweils eine Kolbeneinheit 13, 14 mit einem jeweiligen Kolbenboden 21, 22, einer sich daran anschließenden Kolbenstange mit jeweils außen liegendem Gabelkopf 24, 24' als Gelenkverbindung zu den jeweiligen Seitenteilen. Die Kolbeneinheiten 13, 14 sind endseitig des Zylinderrohres abgedichtet und gegen Herausfallen gesichert. Die Mittelwand 19 ist mit einem Durchbruch 20 versehen, welcher sich in die rechte und linke Zylinderhälfte erstreckt und zudem nach außen in einen Anschluss für eine hydraulische Druckversorgung führt. Wird der Durchbruch 20 mit hydraulischem Druck beaufschlagt, fahren die beiden Kolbeneinheiten 13, 14 nach außen. Wird der Durchbruch von Druck entlastet, werden die beiden Kolbeneinheiten durch Schwerkraft der Seitenteile bzw. durch Druckbeaufschlagung der Kolbenringseiten über die außen liegenden Leitungsanschlüsse nach innen gedrückt. Mit einem einzigen Druckanschluss am Zylinder kann eine Schwenkbewegung bereits einfachwirkend in Gang gesetzt werden. Statt eines einzigen Durchbruchs 20 können zwei separate Durchbrüche unabhängig in die jeweiligen Zylinderhälften führen. Damit können die beiden Kolbeneinheiten 13, 14 einzeln und unabhängig voneinander betätigt werden. Mittig auf dem Zylinderrohr 15 sind die Anschlagvorsprünge 16 als Gewindebuchsen aufgeschweißt.

Anstelle von Hydraulikzylindern können auch andere Stellelemente, passiv oder aktiv, verwendet werden.

Transformiert man das beschriebene Rahmensystem um eine seiner Hauptachsen, kann das System auch liegend verwendet werden.

Nicht angeführte Bezugszeichen sind analog zu den anderen Figuren und deren Beschreibungen zu verwenden.

### BEZUGSZEICHENLISTE

| | |
|---|---|
| 1 | Maschinenrahmen |
| 2 | Mittelteil |
| 3 | Mittelebene |
| 4 | Scharnierachsen |
| 5 | Scharnierachse |
| 6 | Seitenteil |
| 7 | Seitenteil |
| 8 | Hebel |
| 9 | Hebel |
| 10 | Hebelende |
| 11 | Hebelende |
| 12 | Hydraulikzylinderbaugruppe |
| 13 | Kolbeneinheit |
| 14 | Kolbeneinheit |
| 15 | Zylinderrohr |
| 16 | Anschlagvorsprung |
| 17 | Anschlagkulisse |
| 18 | Bolzen |
| 19 | Mittelwand |
| 20 | Durchbruch |
| 21 | Kolbenboden |
| 22 | Kolbenboden |
| 23 | Endanschlag |
| 24 | Gabelkopf |
| 25 | Befestigungleiste |
| 26 | Gelenk |
| 27 | Anbaupunkt |
| 28 | Anbaupunkt |
| 29 | Rahmenplatte |
| 30 | Rahmenplatte |

## Patentansprüche

1. Landwirtschaftlicher Maschinenrahmen (1) bestehend aus einem Mittelteil (2), welcher sich seitlich rechts und links seitlich von einer aufrechten Mittelebene (3) eines Maschinenrahmens (1) erstreckt, wobei am rechten und linken Ende des Mittelteils (2) eine jeweilige Scharnierachse (4, 5) etwa parallel zur Mittelebene (3) angeordnet ist und sich rechts und links des Mittelteils (2) zumindest jeweils ein weiteres rechtes und linkes Seitenteil (6, 7) quer zur Mittelebene (3) fortsetzt, wobei das rechte und das linke Seitenteil (6, 7) um die jeweilige Scharnierachse (4, 5) schwenkbar mit dem Mittelteil (2) verbunden ist, wobei die beiden Seitenteile (6, 7) in einer ersten, breiten Arbeitsteilung (Fig. 1) etwa parallel zueinander und senkrecht zur Mittelebene (3) stehen und in einer zweiten, schmaleren Transportstellung (Fig. 2) etwa senkrecht zum Mittelteil (2) und parallel zum Mittelebene (3) angeordnet sind, wobei das rechte und das linke Seitenteil (6, 7) jeweils einen Hebel (8, 9) mit einem äußeren Ende (10, 11) aufweisen, welcher sich im Abstand (a) zur jeweiligen Scharnierachse (4, 5) erstreckt, wobei der jeweilige Hebel (8, 9) des rechten und linken Seitenteils (6, 7) an seinem äußeren Ende (10, 11) gelenkig mit einer etwa quer zur Mittelebene (3) angeordneten Hydraulikzylinderbaugruppe (12) verbunden sind,
**dadurch gekennzeichnet,**
**dass** die Hydraulikzylinderbaugruppe (12) aus einer rechten und einer linken Kolbeneinheit (13, 14) besteht, welche gelenkig mit dem jeweiligen äußerem Ende (10, 11) des Hebels (8, 9) verbunden ist und die Kolbeneinheiten (13, 14) koaxial und begrenzt verschiebbar in einem Zylinderrohr (15) geführt sind und mit dem Zylinderrohr zusammen die Hydraulikzylinderbaugruppe (12) bilden, wobei das Zylinderrohr (15) durch Begrenzungsmittel (16, 17, 18) an einer seitlichen Bewegung zur Mittelebene (3) gehindert ist.

2. Maschinenrahmen nach Anspruch 1,
**dadurch gekennzeichnet,**
**dass** das Begrenzungsmittel in Form zumindest eines Panhardstabes ausgebildet ist, welches das Mittelteil (2) einerseits und das Zylinderrohr (12) anderseits gelenkig verbindet.

3. Maschinenrahmen nach Anspruch 1,
**dadurch gekennzeichnet,**
**dass** das Begrenzungsmittel in Form eines Anschlagvorsprunges (16, 18) ausgebildet ist, welcher sich parallel zur Mittelebene (3) ausdehnt und mit einer Anschlagkulisse (17) in Kontakt oder Wirkverbindung steht, welche den Anschlagvorsprung (16, 18) seitlich zur Mittelebene (3) in seiner Bewegung hindert oder in etwa parallel zur Mittelebene (3) führt.

4. Maschinenrahmen nach Anspruch 1,
**dadurch gekennzeichnet,**
**dass** die Anschlagkulissse (17) zur Mittelebene (3) nichtparallele Seitenwände aufweist.

5. Maschinenrahmen nach einem von vorstehenden Ansprüchen,
**dadurch gekennzeichnet,**
**dass** der Anschlagvorsprung (16, 18) dem Zylinderrohr (15) und die Anschlagkulisse dem Mittelteil (2) oder jeweils umgekehrt zugeordnet ist.

6. Maschinenrahmen nach einem von vorstehenden Ansprüchen,
**dadurch gekennzeichnet,**
**dass** die Hydraulikzylinderbaugruppe (12) unterhalb der Scharnierachsen (4, 5) des Mittelteils (2) angeordnet ist.

7. Maschinenrahmen nach einem von vorstehenden Ansprüchen,
**dadurch gekennzeichnet,**
**dass** das Zylinderrohr (15) durch eine Mittelwand (19) unterbrochen ist, welche zwischen der rechten und der linken Kolbeneinheit (13, 14) angeordnet ist und deren Bewegung ins Innere des Zylinderrohres (15) begrenzt.

8. Maschinenrahmen nach einem von vorstehenden Ansprüchen,
**dadurch gekennzeichnet,**
**dass** sich die Mittelwand (19) des Zylinderrohres (15) als Anschlagvorsprung (16) nach außen in die Anschlagkulisse (17) des Mittelrahmens erstreckt.

9. Maschinenrahmen nach einem von vorstehenden Ansprüchen,
**dadurch gekennzeichnet,**
**dass** die Mittelwand (19) des Zylinderrohres (15) mit zumindest einem Durchbruch (20) versehen ist, welcher den Zylinderraum zwischen einem Kolbenboden (21) und der Mittelwand (19) mit einer angeschlossenen Hydraulikleitung und / oder mit dem gegenüber liegenden Zylinderraum zwischen dem anderen Kolbenboden (22) und der Mittelwand (19) hydraulisch verbindet.

10. Maschinenrahmen nach einem von vorstehenden Ansprüchen,
**dadurch gekennzeichnet,**
**dass** zwischen dem Mittelteil (2) und dem Seitenteil (6, 7) im Abstand zur jeweiligen Scharnierachse (4, 5) weitere Endanschläge (23, 23') vorgesehen sind, welche die Endlagen der jeweiligen Schwenkbewegungen definiert begrenzen.

## Claims

1. An agricultural machine frame (1) consisting of a centre part (2), which laterally on the right and left extends laterally from an upright centre plane (3) of a machine frame (1), wherein on the right and left end of the centre part (2) a respective hinge axis (4, 5) is arranged approximately parallel to the centre plane (3) and to the right and left of the centre part (2) at least one further right and left lateral part (6, 7) each continues transversely to the centre plane (3), wherein the right and the left lateral part (6, 7) is pivotably connected about the respective hinge axis (4, 5) to the centre part (2), wherein the two lateral parts (6, 7) in a first, wide working position (Fig. 1) stand approximately parallel to one another and perpendicularly to the centre plane (3) and in a second, narrower transport position (Fig. 2), are arranged approximately perpendicularly to the centre part (2) and parallel to the centre plane (3), wherein the right and the left lateral part (6, 7) each comprise a lever (8, 9) with an outer end (10, 11), which extends at a distance (a) to the respective hinge axis (4, 5), wherein the respective lever (8, 9) of the right and left lateral part (6, 7) at its outer end (10, 11) are connected in an articulated manner to a hydraulic cylinder assembly (12) arranged approximately transversely to the centre plane (3),
**characterised**
**in that** the hydraulic cylinder assembly (12) consists of a right and a left piston unit (13, 14), which is connected in an articulated manner to the respective outer end (10, 11) of the lever (8, 9) and the piston units (13, 14) are guided in a cylinder tube (15) so as to be coaxially moveable in a limited manner and together with the cylinder tube form the hydraulic cylinder assembly (12), wherein the cylinder tube (15) is prevented by limitations (16, 17, 18) from a lateral movement to the centre plane (3).

2. The machine frame according to Claim 1,
**characterised**
**in that** the limitation means is designed in the form of at least one Panhard rod, which connects the centre part (2) on the one hand and the cylinder tube (12) on the other hand in an articulated manner.

3. The machine frame according to Claim 1,
**characterised**
**in that** the limitation means is designed in the form of a stop projection (16, 18), which expands parallel to the centre plane (3) and is in contact with or operatively connected with a stop connecting-link (17), which prevents the stop projection (16, 18) in its movement laterally to the centre plane (3) or guides the same approximately parallel to the centre axis (3).

4. The machine frame according to Claim 1,
**characterised**
**in that** the stop connecting-link (17) comprises side walls that are non-parallel to the centre plane (3).

5. The machine frame according to any one of the preceding claims,
**characterised**
**in that** the stop projection (16, 18) is assigned to the cylinder tube (15) and the stop slotted guide to the centre part (2) or in each case vice versa.

6. The machine frame according to any one of the preceding claims,
**characterised**
**in that** the hydraulic cylinder assembly (12) is arranged below the hinge axes (4, 5) of the centre part (2).

7. The machine frame according to any one of the preceding claims, **characterised**
**in that** the cylinder tube (15) is interrupted by a centre wall (19), which is arranged between the right and the left piston unit (13, 14) and delimits their movement into the interior of the cylinder tube (15).

8. The machine frame according to any one of the preceding claims, **characterised**
**in that** the centre wall (19) of the cylinder tube (15) as stop projection (16) extends to the outside into the stop connecting-link (17) of the centre frame.

9. The machine frame according to any one of the preceding claims, **characterised**
**in that** the centre wall (19) of the cylinder tube (15) is provided with at least one through-passage (20), which hydraulically connects the cylinder space between a piston head (21) and the centre wall (19) with a connected hydraulic line and/or with the opposite cylinder space between the other piston head (22) and the centre wall (19).

10. The machine frame according to any one of the preceding claims, **characterised**
**in that** between the centre part (2) and the lateral part (6, 7) at a distance from the respective hinge axis (4, 5) further end stops (23, 23') are provided, which delimit the end positions of the respective pivot movements in a defined manner.

## Revendications

1. Cadre de machine agricole (1) composé d'une partie centrale (2), laquelle s'étend latéralement à droite et à gauche latéralement d'un plan médian vertical (3) d'un cadre de machine (1), sachant qu'à l'extrémité droite et gauche de la partie centrale (2) est disposé un axe d'articulation (4, 5) respectif à peu près parallèlement au plan médian (3) et au moins une autre partie latérale droite et gauche (6, 7) se prolonge respectivement transversalement au plan médian (3) à droite et à gauche de la partie centrale (2), sachant que la partie latérale (6, 7) droite et gauche est reliée à la partie centrale (2) pouvant pivoter autour de l'axe d'articulation respectif (4, 5), sachant que les deux parties latérales (6, 7) se trouvent dans une première position de travail large (Fig. 1) à peu près parallèles l'une à l'autre et perpendiculaires au plan médian (3) et sont disposées dans une deuxième position de transport (Fig.2) plus étroite à peu près perpendiculaires à la partie centrale (2) et parallèles au plan médian (3), sachant que la partie latérale droite et gauche (6, 7) comportent respectivement un levier (8, 9) avec une extrémité extérieure (10, 11), lequel s'étend à distance (a) de l'axe d'articulation respectif (4, 5), sachant que les leviers respectifs (8, 9) de la partie latérale droite et gauche (6, 7) sont reliés à son extrémité extérieure (10, 11) de façon articulée à un module de vérin hydraulique (12) disposé à peu près transversalement au plan médian (3)
**caractérisé en ce que**
le module de vérin hydraulique (12) est composé d'une unité de piston droite et gauche (13, 14), laquelle est reliée de façon articulée à l'extrémité extérieure respective (10, 11) du levier (8, 9) et les unités de piston (13, 14) sont guidées pouvant être déplacées coaxialement et de façon limitée dans un tube de vérin (15) et forment ensemble avec le tube de vérin le module de vérin hydraulique (12), sachant que le tube de vérin (15) est empêché dans un mouvement latéral par rapport au plan médian (3) par des moyens de limitation (16, 17, 18).

2. Cadre de machine selon la revendication 1,
**caractérisé en ce que**
le moyen de limitation est constitué sous la forme d'au moins une barre Panhard, laquelle relie de façon articulée la partie centrale (2) d'une part et le tube de vérin (12) d'autre part.

3. Cadre de machine selon la revendication 1,
**caractérisé par**
le moyen de limitation est constitué sous la forme d'une saillie de butée (16, 18), laquelle se prolonge parallèlement au plan médian (3) et se trouve en contact ou en liaison fonctionnelle avec une coulisse de butée (17), laquelle empêche la saillie de butée (16, 18) dans son mouvement latéralement par rapport au plan médian (3) ou la guide à peu près parallèlement au plan médian (3).

4. Cadre de machine selon la revendication 1,
**caractérisé en ce que**
la coulisse de butée (17) comporte des parois latérales non parallèles par rapport au plan médian (3).

5. Cadre de machine selon l'une quelconque des revendications précédentes,
**caractérisé en ce que**
la saillie de butée (16, 18) est attribuée au tube de vérin (15) et la coulisse de butée à la partie centrale (2) ou respectivement vice versa.

6. Cadre de machine selon l'une quelconque des revendications précédentes,
**caractérisé en ce que**
le module de vérin hydraulique (12) est disposé en dessous des axes d'articulation (4, 5) de la partie centrale (2).

7. Cadre de machine selon l'une quelconque des revendications précédentes,
**caractérisé en ce que**
le tube de vérin (15) est interrompu par une paroi centrale (19), laquelle est disposée entre l'unité de piston droit et l'unité de piston gauche (13, 14) et limite le mouvement de celles-ci à l'intérieur du tube de vérin (15) .

8. Cadre de machine selon l'une quelconque des revendications précédentes,
**caractérisé en ce que**
la paroi centrale (19) du tube de vérin (15) s'étend en tant que saillie de butée (16) vers l'extérieur dans la coulisse de butée (17) du cadre central.

9. Cadre de machine selon l'une quelconque des revendications précédentes,
**caractérisé en ce que**
la paroi centrale (19) du tube de vérin (15) est dotée d'au moins un passage (20), lequel relie hydrauliquement l'espace de vérin entre une tête de piston (21) et la paroi centrale (19) à un conduit hydraulique raccordé et/ou à l'espace de vérin opposé entre l'autre tête de piston (22) et la paroi centrale (19).

10. Cadre de machine selon l'une quelconque des revendications précédentes,
**caractérisé en ce que**
d'autres butées finales (23, 23') sont prévues entre la partie centrale (2) et la partie latérale (6, 7) à distance de l'axe d'articulation respectif (4, 5), lesquelles limitent de façon définie les positions finales des mouvements de pivotement respectifs.
